# FASCICULE DE BREVET EUROPEEN

(11) **EP 3 877 668 B1**
(45) Date de publication et mention de la délivrance du brevet: **17.07.2024**
(21) Numéro de dépôt: 19829257.5
(22) Date de dépôt: 30.10.2019
(51) Int. Cl.: F16D 65/00, B60T 17/22, B60T 17/02

(54) **SYSTÈME D'ASPIRATION DES PARTICULES DE FREINAGE AVEC MAINTIEN DE DÉPRESSION**
SYSTEM ZUM ABSAUGEN VON BREMSPARTIKELN OHNE VAKUUMVERLUST
SYSTEM FOR VACUUMING BRAKING PARTICLES WITHOUT LOSS OF VACUUM

(30) Priorité: 08.11.2018 FR 1860309
(43) Date de publication de la demande: 15.09.2021
(73) Titulaire: Tallano Technologies, 75015 Paris (FR)
(72) Inventeur: ADAMCZAK, Loïc, 92100 BOULOGNE BILLANCOURT (FR); LE BOULAIRE, Thibaut, 92100 BOULOGNE BILLANCOURT (FR); HASCOET, Matthieu, 92100 BOULOGNE BILLANCOURT (FR)
(74) Mandataire: Plasseraud IP
(86) Numéro de dépôt international: PCT/FR2019/052581
(87) Numéro de publication internationale: WO 2020/094950

(56) Documents cités:
- EP-A1- 3 369 959
- EP-A2- 1 256 739
- CN-U- 205 951 955
- DE-A1- 102010 024 944
- DE-U1- 202006 016 661
- DE-U1- 29 506 916
- FR-A1- 3 036 351
- GB-A- 2 497 426
- JP-A- 2019 108 812
- JP-A- 2019 529 840
- US-A1- 2017 248 180

## Description

### Domaine technique

L'invention se rapporte aux systèmes d'aspiration des particules de freinage dans des systèmes de freinage à friction. De tels systèmes de freinage à friction peuvent équiper des véhicules routiers ou ferroviaires. De tels systèmes de freinage à friction peuvent aussi équiper des machines stationnaires à rotor comme des éoliennes ou des machines industrielles.

### Contexte et Art Antérieur

Dans de tels systèmes, comme par exemple décrit dans le document GB 2497426A ou dans le document DE4240873, il est prévu une turbine d'aspiration et un filtre de collecte des particules. Les particules émanant de l'abrasion sont ainsi progressivement accumulées dans le filtre de collecte.

La solution raisonnable conventionnelle est de n'activer la turbine d'aspiration que lorsque le freinage à friction est effectivement activé, par le conducteur ou par un système du véhicule ou encore généralement le système de pilotage de la machine.

Toutefois, les inventeurs ont remarqué que le temps requis pour établir la dépression souhaitée dans le conduit et la bouche d'aspiration n'était pas négligeable et que par conséquent, au tout début de la phase de freinage, la dépression pouvait être encore insuffisante pour capter correctement les particules de freinage.

Autrement dit, si on active la source de dépression (la turbine ou autre moyen équivalent) au moment où le freinage à friction commence, la dépression peut parfois mettre trop de temps pour s'établir et le taux de captation n'est pas optimal. Par ailleurs, une commande permanente de la turbine n'est pas non plus souhaitable, au regard de la consommation électrique du moteur de la turbine et du bruit généré par le fonctionnement de la turbine.

La présente invention a pour objet de proposer une solution améliorée au regard de la performance de captation en tout début de phase de freinage à friction.

### Résumé de l'invention

A cet effet, il est proposé un système d'aspiration des particules de freinage d'un système de freinage à friction, le système d'aspiration comprenant :
au moins une source de dépression, au moins une bouche d'aspiration, reliée par un circuit pneumatique à la source de dépression, et une unité de commande, et
des moyens d'obturation agencés sur le circuit pneumatique, les moyens d'obturation étant aptes à isoler au moins une première partie du circuit pneumatique, caractérisé en ce que l'unité de commande commande les moyens d'obturation pour isoler la première partie du circuit pneumatique entre deux utilisations effectives de la source de dépression.

Sous le terme « *moyen d'obturation*», il faut comprendre tout moyen adéquat pour interrompre la possibilité du passage de l'air dans le circuit à un endroit d'intérêt, à savoir une vanne pneumatique, une vanne mécanique, une vanne électromagnétique, clapet commandé.

Sous le terme « *isoler au moins une première partie du circuit pneumatique*», il faut comprendre isoler cette première partie du circuit pneumatique de la pression atmosphérique extérieure, tant du côté de la bouche d'aspiration que du côté du filtre (voire de la source de dépression).

A propos du « circuit pneumatique qui relie la bouche d'aspiration à la source de dépression », il faut comprendre une conduite fluide qui va de la bouche d'aspiration à la turbine soit directement soit en passant par un filtre. Un premier conduit se situe en aval de la bouche d'aspiration sur le chemin des particules qui va de la bouche d'aspiration vers le filtre, la turbine peut être agencée en aval du filtre ou inversement. Le premier conduit est tout ou partie en dépression, sans exclure qu'une partie en aval de la turbine soit en surpression (filtre en aval de la turbine).

Grâce aux dispositions énoncées ci-dessus, il est possible de conserver une dépression dans la première partie du circuit pneumatique dans un intervalle de temps entre deux activations effectives de la source de dépression. Ce qui permet avantageusement de ne pas attendre le temps de réactivation de la source de dépression au tout début d'une nouvelle phase de freinage à friction. En effet, la dépression régnant dans la première partie du circuit pneumatique est mise en communication avec la bouche d'aspiration sans attendre l'activation complète de la source de dépression.

Dans divers modes de réalisation de l'invention concernant le système, on peut éventuellement avoir recours en outre à l'une et/ou à l'autre des dispositions suivantes, prises isolément ou en combinaison.

Selon une option, le système peut comprendre au moins un filtre pour collecter les particules aspirées.

Selon une option préférentielle, les moyens d'obturation comprennent au moins une première vanne (51) agencée au voisinage de la bouche d'aspiration et au moins une deuxième vanne (52) agencée au voisinage de la source de dépression. Moyennant quoi, on isole la majeure partie du circuit pneumatique reliant la bouche d'aspiration au filtre, cette partie pouvant présenter une certaine longueur, la conservation de dépression dans son espace intérieur est d'autant plus avantageuse que la turbine comme source de dépression met un certain temps à se mettre en route et à rejoindre sa vitesse de rotation cible.

Selon une option, le circuit pneumatique (3,30) en question inclut un filtre de collecte des particules.

Selon une option alternative, la première partie du circuit pneumatique qui fait l'objet de l'isolation sélective n'inclut pas le filtre de collecte des particules.

Selon une option, la deuxième vanne pourrait être agencée au voisinage du filtre (au lieu au voisinage de la source de dépression).

Selon une option, il est prévu plusieurs bouches d'aspiration pour le au moins un filtre, le système comprenant en outre des vannes additionnelles (53-55), de sorte qu'il est prévu une vanne au voisinage de chaque bouche d'aspiration. Moyennant quoi, on a un filtre et une turbine centralisés, reliés à plusieurs bouches d'aspiration. Moyennant quoi, le coût de la solution complète est optimisé. De plus, cela renforce l'intérêt du maintien de la dépression dans le circuit pneumatique ce d'autant plus que dans un système centralisé, la longueur des tuyauteries peut être importante ainsi que le volume d'air emprisonné à l'intérieur.

Selon une option, ladite première vanne (51) et ladite deuxième vanne (52) sont des électrovannes, et de préférence les vannes additionnelles sont des électrovannes additionnelles (53-55). Ainsi, on obtient une solution très souple et rapide qui permet de commander électriquement l'ouverture ou la fermeture des moyens d'obturation.

Selon une option, l'unité de commande (6) est configurée pour piloter individuellement chacune des première et deuxième électrovannes, et le cas échéant pour piloter individuellement les électrovannes additionnelles. Moyennant quoi, il est possible d'avoir un décalage temporel de la commande de la première électrovanne et de la commande de la deuxième électrovanne comme il sera vu plus loin, ou plus généralement une séquence temporelle quelconque suivant le nombre et la configuration des électrovannes.

Selon une option la source de dépression est formée par une turbine (10) entraînée par un moteur électrique (11). Ceci forme une solution indépendante de tout autre système pneumatique du véhicule, en outre cette solution bénéficie d'une grande souplesse de pilotage, on peut commander la turbine notamment en tout ou rien ou selon une vitesse de rotation quelconque.

Selon une option alternative, la source de dépression est formée par une source de dépression préexistante sur le véhicule, notamment pour le cas du domaine automobile une source de dépression induite par le fonctionnement du moteur du véhicule par exemple en dérivation de l'admission d'air, ou bien en autre exemple par l'utilisation d'un effet Venturi sur un flux de gaz sortant par exemple les gaz d'échappement. Pour le cas du domaine ferroviaire, la source de dépression peut être dérivée de l'équipement pneumatique de freinage ou d'un autre équipement auxiliaire du véhicule ferroviaire.

Selon une option, l'unité de commande (6) est configurée en outre pour commander sélectivement la source de dépression, de façon coordonnée par rapport à la commande des électrovannes. On peut ainsi avoir un séquencement précis et répétable concernant la commande de la source de dépression (par exemple la turbine), et la commande des électrovannes qui permettent d'obturer le circuit pneumatique pour y maintenir une dépression entre deux séquences de freinage.

Selon une option, la valeur de dépression de consigne prédéterminée pendant la phase d'aspiration est choisie dans une plage de 20 à 40 millibars en dessous de la pression ambiante. Avantageusement, il s'agit d'une plage optimale pour capter efficacement les particules de freinage tout en conservant un dimensionnement raisonnable et peu coûteux et des dimensions modérées pour les éléments du système.

Avantageusement, moyennant un séquencement astucieux de la commande des électrovannes, on peut conserver un niveau de dépression (DPR2) au moins égal à la valeur de consigne entre deux phases effectives de freinage.

La présente invention concerne aussi un procédé pour piloter un système d'aspiration des particules de freinage à friction d'un système de freinage d'un véhicule, le système d'aspiration comprenant au moins une source de dépression (une turbine ou autre), au moins une bouche d'aspiration, au moins un circuit pneumatique (3,30) reliant la bouche d'aspiration et la source de dépression, des moyens d'obturation agencés sur le circuit pneumatique pour isoler sélectivement au moins une première partie du circuit pneumatique avec une première vanne agencée au voisinage de la bouche d'aspiration et au moins une deuxième vanne, et une unité de commande configurée pour mettre en oeuvre les étapes :
**a1-** fermer la première vanne (51)
**a2-** fermer la deuxième vanne (52),
de manière à isoler la première partie du circuit pneumatique jusqu'à la prochaine utilisation effective de la source de dépression,
**b-** cesser l'activation de la source de dépression (turbine ou autre),
**z-** attendre une nouvelle occurrence de nécessité d'activer la source de dépression,
**c0-** activer la source de dépression (turbine ou autre),
**c1-**ouvri**r** la première vanne (51)
**c2-** ouvrir la deuxième vanne (52).

Grâce à ces dispositions, il est possible de conserver une dépression dans la première partie du circuit pneumatique dans un intervalle de temps entre deux activations effectives de la source de dépression. Ce qui permet avantageusement de ne pas attendre le temps de réactivation de la source de dépression au tout début d'une nouvelle phase de freinage à friction. En effet, la dépression régnant dans la première partie du circuit pneumatique est mise en communication avec la bouche d'aspiration sans attendre l'activation complète de la source de dépression.

Dans divers modes de réalisation de l'invention concernant le procédé, on peut éventuellement avoir recours en outre à l'une et/ou à l'autre des dispositions suivantes, prises isolément ou en combinaison.

Selon une option, l'ouverture de la première vanne précède l'ouverture de la deuxième vanne, autrement dit les étapes c1- et c2- sont réalisées dans l'ordre chronologique, pendant l'activation de la source de dépression. Étant donné qu'on ouvre en premier l'extrémité située du côté de la bouche d'aspiration, la dépression présente dans le circuit pneumatique à cet endroit a tendance à aspirer les particules même si la deuxième électrovanne et la turbine ne sont pas encore excitées.

Selon une option, ladite première vanne (51) et ladite deuxième vanne (52) sont des électrovannes et leur ouverture et leur fermeture est pilotée par l'unité de commande (6), avec de préférence un pilotage individuel de manière à pouvoir réaliser les étapes c1- et c2- avec un décalage temporel maîtrisé selon l'ordre chronologique établi susmentionné. On peut ainsi prévoir un décalage temporel programmable ou issu d'un paramètre une calibration. La mise au point du système et son adaptabilité sont ainsi facilitées.

Selon une option, la fermeture de la première vanne précède la fermeture de la deuxième vanne, autrement dit les étapes a1- et a2- sont réalisées dans l'ordre chronologique, avant ou pendant la désactivation de la source de dépression. Moyennant quoi, on peut obtenir un accroissement de la dépression juste avant de refermer la deuxième électrovanne. Ceci est bénéfique pour provoquer une aspiration efficace lors de la prochaine réouverture de la première électrovanne.

### Description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- La figure 1 représente une vue de profil d'un exemple d'un organe de freinage à friction,
- La figure 2 représente un diagramme de principe d'un système d'aspiration des particules de freinage localisé pour une roue ou un essieu,

- La figure 3 représente un diagramme de principe d'un système d'aspiration des particules de freinage centralisé sur plusieurs roues ou essieux,
- La figure 4 représente un schéma de principe fonctionnel d'un système d'aspiration des particules de freinage,
- La figure 5 représente des chronogrammes illustrant au moins une fonctionnalité du système,
- La figure 6 donne une illustration physique des composants du système d'aspiration des particules de freinage,
- La figure 7 représente une variante de diagramme de principe d'un système d'aspiration,
- La figure 8 représente une variante de diagramme de principe d'un système d'aspiration,
- La figure 9 illustre schématiquement une électrovanne.

### Description détaillée

Sur les différentes figures, les mêmes références désignent des éléments identiques ou similaires. Pour des raisons de clarté de l'exposé, certains éléments ne sont pas nécessairement représentés à l'échelle.

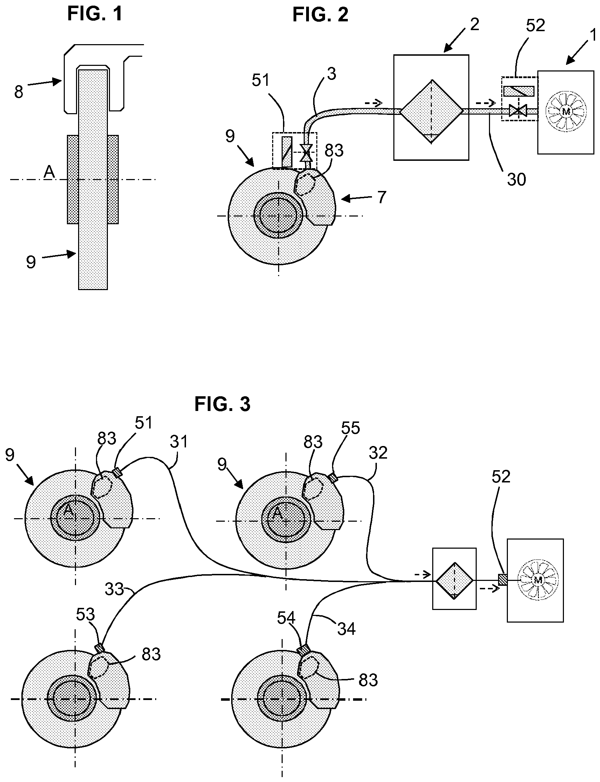

La figure 1 représente schématiquement un organe de freinage à friction. Dans le cas illustré, on a représenté un disque de frein **9** destiné à être rendu solidaire en rotation d'une roue (voire un essieu pour du matériel ferroviaire). Le disque **9** tourne autour de l'axe **A.** Selon l'art connu, on dispose un étrier **7** à cheval sur le disque et monté sur un support d'étrier. De plus, l'étrier comprend un piston configuré pour agir sur des patins de friction afin de prendre en sandwich le disque. Les patins de friction (non représentés) sont montés sur des plaquettes ou des semelles, tout ceci étant connu par ailleurs en soi et non décrit ici en détail.

Bien que l'on ait représenté un schéma de frein à disque, la présente invention convient également pour des freins à tambour, voire des systèmes de frein par patins appliqués directement sur la jante de roue.

À l'endroit des patins à friction, il est prévu un dispositif de captation 8 des particules qui s'en échappent. Plus particulièrement, on peut prévoir une bouche d'aspiration **83** pour chacun des patins à friction. On peut par exemple trouver un exemple dans le document FR3057040 du présent déposant, où les particules sont captées dans des rainures ménagées dans le matériau de friction. La bouche d'aspiration peut être formée par la (ou les) rainure(s) elle-même raccordée à un trou traversant dans la semelle de la garniture de friction et en communication avec un passage aval (vers le filtre).

La bouche d'aspiration **83** est reliée à une source de dépression par un circuit pneumatique. Le circuit pneumatique peut comprendre un premier conduit **3** et un deuxième conduit **30.**

D'une façon générale, la bouche d'aspiration peut se trouver sur la trajectoire des particules à leur sortie de l'interface entre le patin et l'organe tournant (disque, tambour, jante..). C'est la dépression ou le débit créés à cet endroit qui contribue à une bonne captation.

Dans d'autres configurations, il peut être prévu un capotage auquel cas la bouche d'aspiration est formée par la sortie de l'espace recouvert par ledit capotage.

Il faut donc comprendre que la présente invention peut être appliquée quel que soit la configuration de la bouche d'aspiration **83.**

Typiquement pour une configuration de frein à disque, il y aura une bouche d'aspiration 83 de chaque côté du disque comme illustré à la figure 1.

La bouche d'aspiration (ou les bouches d'aspiration selon les cas) est reliée à un filtre **2** par une conduite du circuit pneumatique **3,** comme ceci est exemplifié à la figure 2. Le circuit pneumatique **3** peut être formé comme une tuyauterie sans exclure un passage sous forme de tunnel au travers d'une pièce (par exemple le corps de l'étrier). Le circuit pneumatique peut présenter une longueur plus ou moins importante, cette longueur peut aller de quelques dizaines de centimètres, par exemple 50 cm, jusqu'à plusieurs mètres dans une configuration de filtrage centralisé comme il est illustré à la figure 3.

Il prévu de faire appel à une source de dépression.

D'une façon générale, la liaison fluidique formée par le circuit pneumatique entre la bouche d'aspiration et la source de dépression (avec ou sans le filtre interposé) peut comprendre une ou plusieurs dérivations, des raccords en T, en Y etc.

La liaison fluidique entre la bouche d'aspiration et le filtre **2** peut comprendre des portions rigides et des portions de conduite souples.

On peut trouver différentes configurations entre les bouches d'aspiration, le filtre et la source de dépression : on peut avoir un filtre pour chaque bouche d'aspiration (configuration décentralisée au maximum), voire pour chaque paire de bouches d'aspiration (Fig 2), mais on peut aussi avoir un seul filtre pour une pluralité de paires de bouches d'aspiration (Fig 3) (configuration dite centralisée), voire un seul filtre pour l'ensemble de véhicule. Ce choix peut être dicté par le type de véhicule, la durée de vie nécessaire pour le filtre avant colmatage, les diverses contraintes d'implantation dans le véhicule, etc.

Avantageusement selon la présente invention, il est prévu des moyens d'obturation pour pouvoir isoler sélectivement au moins une partie du circuit pneumatique.

Selon l'exemple illustré ici à la figure 2, les moyens d'obturation comprennent une première vanne **51** et une deuxième vanne **52** agencée en aval de la première sur le circuit pneumatique.

La première vanne 51 est agencée au voisinage de la bouche d'aspiration 83. Dans un exemple, la première vanne 51 est commune à deux bouches d'aspiration par exemple de part et d'autre d'un disque et isole les deux bouches d'aspiration 83.

La deuxième vanne 52 est agencée au voisinage de la source de dépression 1. Avantageusement, les vannes en question sont des vannes tout ou rien et sont du type ouvert à l'état repos (normalement ouverte). Autrement dit, en l'absence d'excitation, les vannes n'obturent pas le passage de l'air dans le circuit pneumatique.

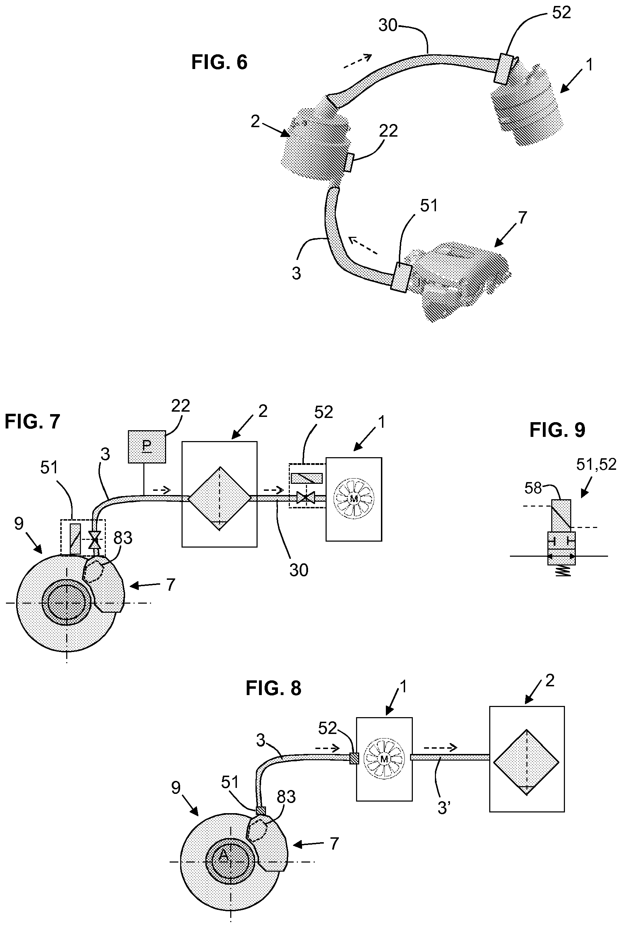

Selon un exemple type, les vannes en question sont des électrovannes et peuvent être commandées par excitation électrique. De préférence ce sont des électrovannes tout ou rien. De préférence il s'agit d'électrovannes normalement ouvertes. Ainsi, dans le cas d'une défaillance électrique ou du circuit de commande, l'électrovanne reste ouverte et la fonction d'aspiration est préservée. La figure 9 illustre schématiquement une telle électrovanne normalement ouverte. La bobine de commande 58 est commandée par une unité de commande 6 dont il sera question plus loin.

On choisira de préférence des électrovannes de petite taille c'est-à-dire des électrovannes miniatures.

Selon un exemple de réalisation, la première électrovanne 51 est intégrée à l'assemblage de l'étrier et/ou du support d'étrier.

Selon un exemple de réalisation, la deuxième électrovanne 52 peut être intégrée à la source de dépression. D'autres positions pour les électrovannes ne sont pas exclues.

Sur les figures 2 et 6, on a représenté une configuration en dépression, avec le filtre interposé entre le premier conduit **3** et la source de dépression **1** qui aspire les particules au travers du filtre qui se trouve alors en dépression par rapport à la pression ambiante extérieure. Toutefois, dans une configuration représentée à la figure 8, la source de dépression (ici la turbine **1**) peut être interposée entre le premier conduit **3** et le filtre, auquel cas la turbine aspire les particules puis la turbine les souffle dans le filtre via un conduit aval noté **3'.** Dans ce cas, le filtre **2** en surpression au lieu de dépression.

Le filtre **2** peut, dans un exemple type de réalisation, comprendre un média filtrant, de type papier ou autre, laissant passer l'air et piégeant les petites particules contenues dans le flux en provenance des bouches d'aspiration.

Le terme 'filtre' doit être compris ici largement, ce terme comprend des solutions de filtre centrifuge (type 'cyclone'), des solutions de filtre à technique de piégeage électromagnétique, des solutions de filtre à technique de piégeage électrostatique. Le terme 'filtre' inclut aussi une solution où les particules sont dirigées vers un filtre déjà existant comme le filtre à air habitacle ou vers le filtre du pot catalytique

Le filtre à particules 2 est configuré pour filtrer de l'air provenant des bouches d'aspiration incluant des particules solides présentant des dimensions micrométriques ou millimétriques, c'est-à-dire laisser l'air traverser le média filtrant alors que les particules ne traversent pas le média filtrant et y sont piégées.

Dans l'exemple illustré, la source de dépression **1** est formée par une turbine d'aspiration **10** entraînée par un moteur électrique **11.**

Dans l'exemple illustré, la turbine avec son moteur électrique forme une entité distincte du filtre. Dans ces conditions, il est prévu une seconde conduite fluide pneumatique **30** pour relier la turbine au filtre.

Il faut noter qu'une configuration avec la turbine et le filtre dans une seule entité est également possible.

On remarque que selon l'exemple illustré la figure 2, la portion du circuit pneumatique faisant l'objet de l'isolation sélective inclut la première conduite **3,** la seconde conduite **30** et le filtre de captation **2.**

Le volume intérieur du filtre fait ainsi partie de la zone qui va rester en dépression entre deux activations du système de freinage avec excitation de la source de dépression.

La figure 3 illustre une configuration centralisée dans laquelle plusieurs bouches d'aspiration sont desservies par un agencement de filtre et turbine unique. Dans ces conditions, une première tuyauterie **31** dessert un système de frein avec la première électrovanne déjà mentionnée, auprès de la bouche d'aspiration, une deuxième tuyauterie **32** dessert un système de frein de roue avec une électrovanne auxiliaire notée **55,** une troisième tuyauterie **33** dessert un système de frein de roue avec une électrovanne auxiliaire notée **53,** une quatrième tuyauterie **34** dessert un système de frein de roue avec une électrovanne auxiliaire notée **54.** On remarque ici que la longueur des tuyauteries peut être substantielle.

Les électrovannes auxiliaires (additionnelles) 53-55 seront typiquement du même type que les première et deuxième électrovannes, à savoir des électrovannes tout ou rien, des électrovannes de type « normalement ouverte ».

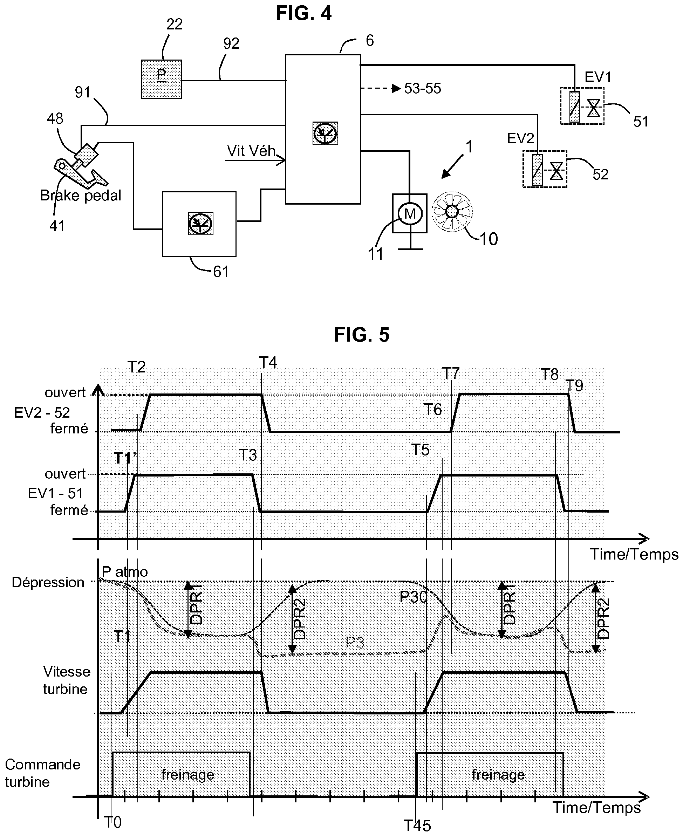

Comme visible à la figure 4, il est prévu une unité de commande **6** en charge de commander les électrovannes décrites ci-dessus. Selon une possibilité, cette unité de commande **6** est également en charge de commander le moteur électrique **11** qui entraîne la turbine lorsque la source de dépression est formée par une turbine. Les commandes peuvent être réalisées typiquement par des transistors de puissance, sans qu'une solution à relais soit exclue pour autant.

L'unité de commande 6 reçoit des informations en provenance de capteur(s) et/ou d'autres unités présentes à bord du véhicule, pour déterminer qu'une séquence d'aspiration doit être activée, et déterminer le ou les instants où l'activation doit être commencée ainsi que le ou les instants où l'activation doit être stoppée.

Le système comprend en outre une pédale de frein **41** destinée à être actionnée par un conducteur du véhicule. Dans certaines configurations, il y a simplement un interrupteur binaire tout ou rien **48** en interaction avec la pédale de frein **41.** Cet interrupteur peut délivrer une information **91** directement à l'unité de commande **6** du système d'aspiration. Dans une autre mode de réalisation l'interrupteur **48** est relié à une unité de commande 61 de la fonction freinage par exemple celle qui gère la fonction ABS, et qui va transmettre une ou plusieurs informations à l'unité de commande 6 de l'aspiration (via une liaison filaire ou un bus multiplexé).

L'unité de commande 6 peut recevoir des informations en provenance du capteur de pression **22** via la liaison repérée **92.** Ce capteur de pression permet de connaître la pression P3 qui prévaut dans le premier conduit pneumatique, ce qui permet de faire un diagnostic du bon fonctionnement des première et deuxième électrovannes. En effet si l'une ou l'autre des électrovannes vient à défaillir, alors la pression résultante dans le premier conduit sera différente de celle attendue au nominal.

Dans d'autres configurations, l'unité de commande 6 peut recevoir des informations, en provenance d'autres éléments présents à bord du véhicule notamment en provenance de l'actionneur de freinage qui pilote le freinage à friction ci-dessus mentionné. L'actionneur de freinage peut être une pédale ou un manipulateur selon le type de matériel ou véhicules concernés (automobile, ferroviaire etc.).

L'unité de commande **6** utilise aussi l'information vitesse véhicule courante **VV.** Celle-ci peut être délivrée par un capteur spécifique ou être mis à disposition par un ou des calculateurs embarqués.

La présente invention convient également pour être appliquée sur des machines stationnaires à rotor comme des éoliennes ou des machines industrielles. Dans ce cas de figure, les informations temporelles d'activation du freinage à friction sont reçues par l'unité de commande **6** du système d'aspiration.

La figure 5 illustre à l'aide d'un de chronogramme un exemple de logique de fonctionnement et de procédé de commande associé.

À l'instant **T0,** les conditions de l'activation d'une phase de freinage à friction sont réunies (par exemple le conducteur appuie sur la pédale de frein ou respectivement tire le manipulateur, ou un système de commande en décide). L'unité de commande 6 active alors la commande de la turbine **11** à l'instant **T1** et déclenche (simultanément ou de manière légèrement différée) l'ouverture de la première électrovanne **51** à l'instant **T1'** (ou la laisse ouverte si elle était déjà ouverte) et active la commande de la turbine 11.

Simultanément ou juste après, à l'instant **T2,** l'unité de commande 6 déclenche alors l'ouverture de la deuxième électrovanne **52** (ou la laisse ouverte si elle était déjà ouverte).

À partir de ce moment, nous sommes dans une phase d'aspiration active dans laquelle la source de dépression, ici la turbine, crée une dépression dans le circuit pneumatique de manière à aspirer les particules émises de l'abrasion des garnitures. Dans cette phase, on constate que la pression régnant dans le premier conduit **3** et la bouche d'aspiration notée **P3** a diminué (dépression **DPR1,** la courbe s'écarte de la pression atmosphérique vers le bas).

À l'instant **T3,** les conditions de désactivation de la phase de freinage à friction sont réunies, l'unité de commande 6 ferme la première électrovanne **51** et stoppe l'excitation de la turbine, simultanément ou de manière légèrement différée. Le temps que la vitesse de la turbine chute à zéro, la dépression dans le conduit pneumatique a tendance à s'accentuer comme il est vu sur la courbe notée **P3** de la dépression en fonction du temps. Un bref délai après **T3,** à l'instant **T4,** l'unité de commande 6 ferme la deuxième électrovanne **52.**

La pression régnant alors dans le premier conduit 3 a encore diminué (dépression **DPR2** plus prononcée que **DPR1,** la courbe est encore plus écartée de la pression atmosphérique vers le bas).

À partir de ce moment, et pendant tout l'intervalle de temps entre deux séquences de freinage, le circuit pneumatique interposé entre la première électrovanne et la deuxième électrovanne reste isolé. Du fait de cette isolation, il conserve la dépression qui régnait au moment de la fermeture de la deuxième électrovanne 52.

Ainsi, la fermeture des première et deuxième électrovannes permet d'isoler au moins une partie du circuit pneumatique.

À l'instant **T5,** les conditions de l'activation d'une phase de freinage à friction sont à nouveau réunies. L'unité de commande 6 déclenche alors l'ouverture de la première électrovanne 51 et active à commande de la turbine 11. Ici on met à profit la dépression qui a été conservée dans la conduite pneumatique pour aspirer les particules de freinage pendant la montée en vitesse de la turbine.

Un bref délai après **T5,** à l'instant **T7,** l'unité de commande 6 ouvre la deuxième électrovanne **52.** À partir de cet instant, on retrouve le circuit pneumatique d'aspiration classique de la phase d'aspiration comme déjà décrit plus haut.

L'instant **T6** correspond à l'établissement du régime de rotation cible pour la turbine.

L'instant **T8** correspond à l'interruption de la commande de la turbine.

La courbe notée **P3** représente la pression régnant à l'intérieur du premier conduit **3** (c'est-à-dire substantiellement la pression d'aspiration appliquée à la bouche d'aspiration **83** quand la première électrovanne 51 est ouverte). On a également représenté en pointillés plus fins **P30** la pression appliquée à la bouche d'aspiration **83** en l'absence des dispositions prévues par la présente invention.

Selon une option possible, il peut être prévu que la séquence d'arrêt de la turbine et de fermeture des électrovannes soit différée par rapport à l'interruption effective du freinage à friction (temporisation de prolongation).

S'agissant du décalage temporel des commandes électrovannes et de la commande de turbine, on peut choisir :
Décalage T0-T1 : compris entre 0ms et 300ms
Décalage T1-T1' : compris entre 0ms et 300ms
Décalage T1'-T2 : compris entre 10ms et 300ms
Décalage T3-T4 : compris entre 10ms et 300ms

Pour fixer les ordres de grandeur, la puissance consommée par la turbine 10 et son moteur électrique 11 peuvent aller de une trentaine de watts jusqu'à plus d'un kilowatt, en pratique cette puissance peut être comprise dans un intervalle [30W - 800W] selon le nombre de bouches d'aspiration à desservir et aussi selon la longueur des tuyauteries qui génèrent une légère perte de charge.

Dans une configuration, la vitesse de la turbine peut aller de 0 à 12 000 tris.

Dans une configuration, la vitesse de la turbine peut aller de 0 à 30 000 tr/s.

Le temps de réponse de la turbine pour aller de zéro à la vitesse de consigne peut être typiquement compris entre 100 ms et 700 ms, le plus souvent pour les applications automobiles entre 400 ms et 600 ms.

## Revendications

1. Système d'aspiration des particules de freinage d'un système de freinage à friction, le système d'aspiration comprenant :
au moins une source de dépression (1), au moins une bouche d'aspiration (83), au moins un circuit pneumatique (3,3',30) reliant la bouche d'aspiration et la source de dépression, une unité de commande (6), et des moyens d'obturation agencés sur le circuit pneumatique, les moyens d'obturation étant aptes à isoler au moins une première partie du circuit pneumatique (3),
**caractérisé en ce que** l'unité de commande (6) commande les moyens d'obturation pour isoler la première partie du circuit pneumatique entre deux utilisations effectives de la source de dépression.

2. Système selon la revendication 1, comprenant en outre au moins un filtre (2) pour collecter les particules aspirées.

3. Système selon l'une des revendications 1 à 2, dans lequel les moyens d'obturation (51,52) comprennent au moins une première vanne (51) agencée au voisinage de la bouche d'aspiration et au moins une deuxième vanne (52) agencée au voisinage de la source de dépression (1).

4. Système selon la revendication 3, dans lequel il est prévu plusieurs bouches d'aspiration pour le au moins un filtre, le système comprenant en outre des vannes additionnelles (53-55), de sorte qu'il est prévu une vanne au voisinage de chaque bouche d'aspiration.

5. Système selon l'une des revendications 1 à 4, dans lequel ladite première vanne (51) et ladite deuxième vanne (52) sont des électrovannes, et de préférence les vannes additionnelles sont des électrovannes additionnelles (53-55).

6. Système selon la revendication 5, dans lequel l'unité de commande (6) est configurée pour piloter individuellement chacune des première et deuxième électrovannes, et le cas échéant pour piloter individuellement les électrovannes additionnelles.

7. Système selon l'une des revendications 1 à 6, dans lequel la source de dépression est formée par une turbine (10) entraînée par un moteur électrique (11).

8. Système selon l'une des revendications 1 à 7, dans lequel l'unité de commande (6) est configurée en outre pour commander sélectivement la source de dépression, de façon coordonnée par rapport à la commande des moyens d'obturation.

9. Procédé pour piloter un système d'aspiration des particules de freinage à friction d'un système de freinage d'un véhicule, le système d'aspiration comprenant:
au moins une source de dépression, au moins une bouche d'aspiration (83), au moins un circuit pneumatique (3,3',30) reliant la bouche d'aspiration et la source de dépression,
des moyens d'obturation agencés sur le circuit pneumatique pour isoler sélectivement au moins une première partie du circuit pneumatique (3) avec une première vanne (51) agencée au voisinage de la bouche d'aspiration et au moins une deuxième vanne, et une unité de commande (6) configurée pour mettre en oeuvre les étapes :
**a1-** fermer la première vanne (51)
**a2-** fermer la deuxième vanne (52),
de manière à isoler la première partie du circuit pneumatique jusqu'à la prochaine utilisation effective de la source de dépression,
**b-** cesser l'activation de la source de dépression (turbine ou autre),
**z-** attendre une nouvelle occurrence de nécessité d'activer la source de dépression,
**c0-** activer la source de dépression (turbine ou autre),
**c1-**ouvrir la première vanne (51)
**c2-** ouvrir la deuxième vanne (52).

10. Procédé selon la revendication 9, dans lequel l'ouverture de la première vanne précède l'ouverture de la deuxième vanne autrement dit et les étapes **c1-** et **c2-** sont réalisées dans l'ordre chronologique, pendant l'activation de la source de dépression.

11. Procédé selon l'une des revendications 9 à 10, dans lequel ladite première vanne (51) et ladite deuxième vanne (52) sont des électrovannes et leur ouverture et leur fermeture est pilotée par l'unité de commande (6), avec de préférence un pilotage individuel de manière à pouvoir réaliser les étapes **c1-** et **c2-** avec un décalage temporel maîtrisé selon l'ordre chronologique établi dans la revendication 9.

12. Procédé selon la revendication 9, dans lequel la fermeture de la première vanne précède la fermeture de la deuxième vanne autrement dit et les étapes **a1-** et **a2-** sont réalisées dans l'ordre chronologique, avant ou pendant la désactivation de la source de dépression.

## Patentansprüche

1. System zum Absaugen von Bremspartikeln aus einem Reibungsbremssystem, wobei das Absaugsystem folgendes umfasst:
wenigstens eine Unterdruckquelle (1), wenigstens eine Ansaugöffnung (83),
wenigstens einen pneumatischen Kreis (3, 3', 30), der die Ansaugöffnung und die Unterdruckquelle verbindet, eine Steuereinheit (6), und Verschlussmittel, die an dem pneumatischen Kreis angeordnet sind, wobei die Verschlussmittel dazu ausgebildet sind, wenigstens einen ersten Teil des pneumatischen Kreises (3) zu isolieren,
**dadurch gekennzeichnet, dass** die Steuereinheit (6) die Verschlussmittel steuert, um den ersten Teil des pneumatischen Kreises zwischen zwei effektive Verwendungen der Unterdruckquelle zu isolieren.

2. System nach Anspruch 1, ferner umfassend wenigstens einen Filter (2) zum Sammeln der abgesaugten Partikel.

3. System nach einem der Ansprüche 1 bis 2, wobei die Verschlussmittel (51, 52) wenigstens ein erstes Ventil (51) umfasst, das in der Nähe der Saugöffnung angeordnet ist, und wenigstens ein zweites Ventil (52) umfasst, das in der Nähe der Unterdruckquelle (1) angeordnet ist.

4. System nach Anspruch 3, wobei mehrere Ansaugöffnungen für den wenigstens einen Filter vorgesehen sind, wobei das System ferner zusätzliche Ventile (53-55) umfasst, so dass in der Nähe jeder Ansaugöffnung ein Ventil vorgesehen ist.

5. System nach einem der Ansprüche 1 bis 4, wobei das erste Ventil (51) und das zweite Ventil (52) Magnetventile sind, und bevorzugt die zusätzlichen Ventile zusätzliche Magnetventile (53-55) sind.

6. System nach Anspruch 5, wobei die Steuereinheit (6) dazu ausgebildet ist, jedes der ersten und zweiten Magnetventile einzeln anzusteuern, und gegebenenfalls die zusätzlichen Magnetventile einzeln anzusteuern.

7. System nach einem der Ansprüche 1 bis 6, wobei die Unterdruckquelle durch eine Turbine (10) gebildet ist, die von einem Elektromotor (11) angetrieben wird.

8. System nach einem der Ansprüche 1 bis 7, wobei die Steuereinheit (6) ferner dazu ausgebildet ist, die Unterdruckquelle selektiv anzusteuern, und zwar koordiniert mit der Ansteuerung der Verschlussmittel.

9. Verfahren zum Steuern eines Systems zum Absaugen von Reibbremspartikeln aus einem Bremssystem eines Fahrzeugs, wobei das Absaugsystem umfasst:
wenigstens eine Unterdruckquelle, wenigstens eine Ansaugöffnung (83), wenigstens einen pneumatischen Kreis (3, 3', 30), der die Ansaugöffnung und die Unterdruckquelle verbindet, Verschlussmittel, die an dem pneumatischen Kreis angeordnet sind, um selektiv wenigstens einen ersten Teil des pneumatischen Kreises (3) zu isolieren, mit einem ersten Ventil (51), das in der Nähe der Ansaugöffnung angeordnet ist, und wenigstens einem zweiten Ventil, und eine Steuereinheit (6), die dazu ausgebildet ist, die folgenden Schritte auszuführen:
**a1-** Schließen des ersten Ventils (51),
**a2-** Schließen des zweiten Ventils (52), um den ersten Teil des pneumatischen Kreises bis zur nächsten tatsächlichen Verwendung der Unterdruckquelle zu isolieren,
**b-** Einstellen des Aktvierens der Unterdruckquelle (Turbine oder andere),
**z-** Warten auf ein erneutes Auftreten der Notwendigkeit, die Unterdruckquelle zu aktivieren,
**c0-** Aktivieren der Unterdruckquelle (Turbine oder andere),
**c1-** Öffnen des ersten Ventils (51),
**c2-** Öffnen des zweiten Ventils (52).

10. Verfahren nach Anspruch 9, wobei das Öffnen des ersten Ventils dem Öffnen des zweiten Ventils vorausgeht, d. h. die Schritte **c1-** und **c2-** in chronologischer Reihenfolge während der Aktivierung der Unterdruckquelle durchgeführt werden.

11. Verfahren nach einem der Ansprüche 9 bis 10, wobei das erste Ventil (51) und das zweite Ventil (52) Magnetventile sind und ihr Öffnen und Schließen von der Steuereinheit (6) gesteuert wird, bevorzugt individuell gesteuert, so dass die Schritte **c1-** und **c2-** mit einem kontrollierten Zeitversatz gemäß der in Anspruch 9 festgelegten chronologischen Reihenfolge durchgeführt werden können.

12. Verfahren nach Anspruch 9, wobei das Schließen des ersten Ventils dem Schließen des zweiten Ventils vorausgeht, wobei mit anderen Worten die Schritte **a1** und **a2** in chronologischer Reihenfolge vor oder während der Deaktivierung der Unterdruckquelle ausgeführt werden.

## Claims

1. System for suctioning braking particles from a friction braking system, the suction system comprising:
at least one negative-pressure source (1), at least one suction mouth (83), at least one pneumatic circuit (3,3',30) connecting the suction mouth to the negative-pressure source, a control unit (6), and closure means arranged on the pneumatic circuit, the closure means being able to isolate at least a first portion of the pneumatic circuit (3),
**characterized in that** the control unit (6) controls the closure means in order to isolate the first portion of the pneumatic circuit between two actual uses of the negative-pressure source.

2. System according to claim 1, further comprising at least one filter (2) to collect the suctioned particles.

3. System according to one of claims 1 to 2, wherein the closure means (51,52) comprise at least a first valve (51) arranged in the vicinity of the suction mouth and at least a second valve (52) arranged in the vicinity of the negative-pressure source (1).

4. System according to claim 3, wherein several suction mouths are provided for the at least one filter, the system further comprising additional valves (53-55), such that a valve is provided in the vicinity of each suction mouth.

5. System according to one of claims 1 to 4, wherein said first valve (51) and said second valve (52) are solenoid valves, and preferably the additional valves are additional solenoid valves (53-55).

6. System according to claim 5, wherein the control unit (6) is configured to control individually each of the first and second solenoid valves, and where appropriate to control individually the additional solenoid valves.

7. System according to one of claims 1 to 6, wherein the negative-pressure source is formed by a turbine (10) driven by an electric motor (11).

8. System according to one of claims 1 to 7, wherein the control unit (6) is further configured to control the negative-pressure source selectively, in a manner coordinated with the controlling of the closure means.

9. Method for controlling a system for suctioning friction braking particles from a braking system of a vehicle, the suction system comprising:
at least one negative-pressure source, at least one suction mouth (83), at least one pneumatic circuit (3,3',30) connecting the suction mouth and the negative-pressure source, closure means arranged on the pneumatic circuit in order to isolate selectively at least a first portion of the pneumatic circuit (3) with a first valve (51) arranged in the vicinity of the suction mouth and at least a second valve, and a control unit (6) configured to implement the steps of:
**al-** closing the first valve (51)
**a2-** closing the second valve (52),
so as to isolate the first portion of the pneumatic circuit until the next actual use of the negative-pressure source,
**b-** stopping the activation of the negative-pressure source (turbine or other),
**z-** waiting for a new occurrence of the need to activate the negative-pressure source,
**c0-** activating the negative-pressure source (turbine or other),
**cl-**opening the first valve (51)
**c2-** opening the second valve (52).

10. Method according to claim 9, wherein the opening of the first valve precedes the opening of the second valve, in other words steps **cl-** and **c2-** are carried out in chronological order, during activation of the negative-pressure source.

11. Method according to one of claims 9 to 10, wherein said first valve (51) and said second valve (52) are solenoid valves and their opening and closing is controlled by the control unit (6), preferably with individual control so as to be able to carry out steps **cl-** and **c2-** with a timing staggered according to the chronological order established in claim 9.

12. Method according to claim 9, wherein the closing of the first valve precedes the closing of the second valve, in other words steps **a1-** and **a2-** are carried out in chronological order, before or during deactivation of the negative-pressure source.
